Europäisches Patentamt

(19) European Patent Office

Office européen des brevets

(11) Publication number: **0 093 435**
**B1**

(12) **EUROPEAN PATENT SPECIFICATION**

(45) Date of publication of patent specification: **04.12.85**

(21) Application number: **83104242.9**

(22) Date of filing: **29.04.83**

(51) Int. Cl.⁴: **C 02 F 1/46,** C 25 B 1/16, B 01 J 49/00

(54) **Electrolytic purification and reconcentration of wash and rinse caustic solutions recovered from the regeneration of ion exchange resins.**

(30) Priority: **30.04.82 IT 2101582**

(43) Date of publication of application:
**09.11.83 Bulletin 83/45**

(45) Publication of the grant of the patent:
**04.12.85 Bulletin 85/49**

(84) Designated Contracting States:
**AT BE CH DE FR GB LI NL SE**

(56) References cited:
**GB-A-1 240 710**
**US-A-3 493 488**
**US-A-4 260 463**

(73) Proprietor: **ORONZIO DE NORA S.A.**
**Via Cattedrale, 4**
**CH-6900 Lugano (CH)**

(72) Inventor: **Benedetto, Enrico**
**Via P. Ferraris, 31**
**I-28037 Domodossola (IT)**

(74) Representative: **Kinzebach, Werner, Dr. et al**
**Patentanwälte Reitstötter, Kinzebach und**
**Partner Postfach 780**
**D-8000 München 43 (DE)**

Courier Press, Leamington Spa, England.

**Description**

The present invention concerns an electrolytic process for the purification and reconcentration of caustic soda solutions recovered from the regeneration of anion exchange resins.

The bed of particles of ion exchange resin in plants for the demineralization of water, of salt solutions or of other types of solutions such as halogenated organic solutions, which utilize anion exchange resins, has to be regenerated after a certain period of operation in order to remove the impurities, consisting of anion groups sequestered by the resin and thus to restore the adsorption capacity of the bed.

The regeneration process consists essentially of a washing stage wherein a solution containing from 150 g/l to 60—70g/l of caustic soda, depending on the type of anion exchange resin, is flowed countercurrent through the bed, to obtain the maximum expansion of the bed, for the time necessary to regenerate completely the adsorption capacity of the resin. This is followed by a short rinsing stage, with water, for one or more minutes in order to remove the caustic soda from the circuit before re-starting normal operation.

The regeneration solution as well as the rinsing water are obviously contaminated by the impurities removed from the resin and therefore cannot be re-utilizedf further but have to be neutralized and diluted in order to be discharged in accordance to the pollution control regulations. This accounts for a significant portion of the expenditure for the maintenance of the demineralization plant and anyway it always consitutes a potential risk of pollution.

US—A 4 260 463 relates to an electrolytic process having the features of the preamble of claim 1. The prior art process does not teach that the electrolysis should be conducted in stages but rather suggests that the current density should be constant. As by-products, chlorine gas and caustic values are produced and recovered to the extent necessary to anodically oxidize the organic carbon content of the waste stream. The solution contains sufficient alkali metal halide, at least 5 percent by weight, therefore generating chlorine at the anode as the major anode reaction.

It is therefore the main object of the present invention to provide a process for the purification and reconcentration of the caustic solution effluent from the regeneration and rinsing stages, in order to allow re-utilization of the purified and re-concentrated caustic soda solution with a minimum of caustic solution needing to be discharged after every regeneration treatment.

This object is achieved with an electrolytic process having the features of claim 1.

The process of the present invention consists of electrolyzing the contaminated caustic soda solution in one or more electrolysis cells provided with an anodic compartment containing an anode and a cathodic compartment containing a cathode, separated by an ion exchange resin membrane permeable to cations and substantially impervious to the hydrodynamic flow of fluids.

The contaminated caustic solution recovered as effluent from the regeneration and rinsing stages, is circulated through the anodic compartment of the cell, while demineralized water is suitably fed to the cathodic compartment.

The electrolysis current applied to the cell gives rise to oxygen evolution at the anode, sodium ion migration through the membrane and hydrogen evolution at the cathode.

Therefore, the concentration of caustic soda in the anodic solution decreases while the concentration of caustic soda in the catholyte increases during the electrolytic process. The impurities contained in the contaminated caustic solution fed to the anodic compartment, which generally are constituted by anions such as $Cl^-$, $SO_4^{--}$, $Br^-$, $I^-$, remain in the anolyte because the cation exchange membrane acts as a barrier preventing their diffusion to the catholyte.

Therefore, the caustic solution recovered from the cathodic compartment together with the hydrogen produced is reconcentrated to the desired value and is essentially free from contaminants and thus may be re-used during the next cycle of regeneration of the anion exchange resins.

The treatment of the contaminated caustic solution may be carried out to obtain a reduction of the residual caustic soda content to 1—2 g/l. This residual solution containing all the contaminating anion species constitutes the waste of every regeneration treatment and in practice corresponds to about the 4% of the caustic soda recovered after every washing stage.

The contaminated caustic solution is subjected to a cascade treatment, firstly in an electrolysis cell operating at high current density, which may be comprised between 1500 and 3000 A/m² to reduce the caustic soda content to about 15—10 g/l. The solution released from the anodic compartment of the first cell is then fed to the anodic compartment of a second cell operating at a lower current density, which may be comprised between 1000 and 500 A/M², to reduce the caustic soda content to about 1—2 g/l.

This staging of the electrolytic treatment of the contaminated caustic solution allows one to keep a relatively low cell voltage both in the first and in the second stage. In fact when the caustic soda concentration in the anolyte is reduced below about 15—10 g/l, a considerable increase of the cell voltage is observed. Therefore, by carrying out the final stage of the electrolytic treatment in a cell at low current density, the cell voltage may be kept below about 5 Volts, which may be considered as the maximum cell voltage allowable in order to avoid premature loss of activity of the anodes and damage of the membrane.

The number of stages also may be advantageously increased so that successive electrolytic treatments of the contaminated caustic solution, to reduce the caustic soda content from 15—20g/l down to 2—1 g/l, may be effected each under decreasing densities, for example from 1000 A/m² step-wise down to 500 A/m².

2

This may be achieved by providing various cells where to flow the anodic solution in cascade or by suitably varying the current load during the final stage of the treatment, if a single cell is utilized.

Obviously, also the catholyte may be flown in cascade from one cell to the other, but it has been found more efficient to maintain the same caustic soda concentration in the catholyte of all the cells utilized by feeding to every cathode compartment demineralized water at a rate suitable to obtain the desired concentration of caustic soda at the outlets of the cathodic compartments, that is in the range between 100 and 200 g/l.

In case a batch type treatment of the contaminated caustic solution is envisaged, instead of a continuous operation, it is not required to have several cells at disposal but the same staging of the electrolytic treatment for the purification and reconcentration of the caustic solution may be conveniently done utilizing a single electrolysis cell by suitably decreasing the current load during the successive stages of the electrolytic treatment.

In order to better illustrate the invention, a practical example of a preferred embodiment is reported herewith. The characteristics and the working conditions of the cell however, are simply illustrative and must not be intended as a limitation of the invention claimed hereby.

Example

The electrolysis cell utilized for the test had an electrode surface of 25 dm².

The anode was constituted by an expanded titanium sheet having an original thickness of 1.5 mm, coated with a deposit of about 30 g/m² of mixed oxides of titanium, ruthenium and iridium in the following ratio by weight 1:1:0.1.

The cathode was constituted by a nickel expanded sheet having an original thickness of 1.5 mm.

The membrane used was a film of a hydrolyzed copolymer of tetrafluoroethylene and a fluorosulphonated perfluorovinyl ether, produced by E. I. Du Pont de Nemours & Co. under the trade name of Nafion 324.

The contaminated and diluted caustic solution to be treated and which was recovered from the washing and rinsing of a column of anion exchange resin, had the following characteristics:

| | |
|---|---|
| NaOH | 50g/l |
| NaCl | 2—3 g/l |
| $H_2SO_4$ | traces. |

1st Stage

The contaminated caustic solution was circulated by means of a pump through the anodic compartment of the cell and demineralized water was fed to the cathodic compartment at a suitable flow rate.

The working conditions were as follows:

| | |
|---|---|
| anolyte temperature | 50—60°C |
| current density (constant) | 2000 A/m² |
| caustic soda concentration in the catholyte (caustic soda continuously recovered from the cathodic compartment) | 150 g/l |

Electrolysis was continued under these conditions until the caustic soda concentration in the caustic solution circulated in the anodic compartment had been reduced to 12 g/l. The cell voltage which was initially 3.3 V constantly increased to reach 4 V, at the end of this first stage of the treatment.

2nd Stage

In order to further reduce the caustic soda concentration in the contaminated solution (anolyte), electrolysis was continued at gradually decreased current densities in order to keep the cell voltage at about 5 V.

The working conditions of this second stage were as follows:

| | |
|---|---|
| anolyte temperature | 50°C |
| current density (decreasing) | from 1000 to 500 A/m² |
| caustic soda concentration in the catholyte (caustic soda continuously recovered from the cathodic compartment) | 150 g/l |
| cell voltage (constant) | 5 V. |

Electrolysis was continued until the caustic soda concentration in the anolyte had decreased to below 2 g/l.

Samples of the purified and reconstructed caustic soda recovered from the cathodic compartment of the cell collected during both treatment stages were analyzed and the results were as follows:

| | |
|---|---|
| NaOH | 150 g/l |
| NaCl | 150 ppm* |
| $NaSO_4$ | nil |

(* ppm=parts per million)

The specific electric energy consumption resulted of about 3.5 kWh per kg of purified NaOH recovered from the catholyte of the cell.

By products of the process were:

280 l of hydrogen per kg of purified NaOH
140 l of oxygen per kg of purified NaOH.

Claims

1. Electrolytic process for the purification of contaminated caustic solutions which comprises feeding the contaminated caustic solution to the anodic compartment of an electrolysis cell separated from the cathodic compartment by a cation exchange membrane,

feeding demineralized water to said cathodic compartment, and

recovering purified caustic solution from said cathodic compartment,

characterized in that

the initial caustic concentration exceeds 15 g/l, the electrolysis is conducted at a current density between 1500 and 3000 ampere per square meter until the caustic concentration in the anolyte is reduced to a value not lower than 10 g/l, and

that then the electrolysis is conducted at a current density between 1000 and 500 ampere per square meter to further reduce the caustic concentration in the anolyte to below 2 g/l

while the caustic concentration in the catholyte is maintained constant by regulating the rate of feeding of the demineralized water to said cathode compartment.

2. Electrolytic process of claim 1, characterized in that

the electrolysis is conducted in at least two electrolysis cells,

the contaminated caustic solution is passed in cascade through the anode compartments of said cells starting from the cell operating at a higher current density through to the cell operating at the lowest current density, and

the contaminated caustic solution having a residual caustic concentration of less than 2 g/l is discharged from said cell operating at the lowest current density.

3. Process of claim 1 or 2, characterized in that contaminated caustic solution from the regeneration of ion exchange resins is used.

4. Process according to one of the claims 1—3, characterized in that the cell voltage is below about 5 volts.

5. Process of one of the claims 1—4, characterized in that the caustic concentration in the anolyte is reduced to a value of 15 to 10 g/l in the electrolysis conducted at a current density between 1500 and 3000 ampere per square meter and

that the caustic concentration in the anolyte is reduced to a value of 1 to below 2 g/l in the electrolysis conducted at a current density of between 1000 and 500 ampere per square meter.

6. Process of any of the claims 1—5, characterized in that the caustic concentration in the catholyte is kept constant within a range between 100 and 200 g/l by regulating the demineralized water feed rate.

**Patentansprüche**

1. Elektrolytisches Verfahren zur Reinigung kontaminierter kaustischer Lösungen, wobei man die kontaminierte kaustische Lösung in das Anodenabteil einer Elektrolysezelle leitet, die vom Kathodenabteil durch eine Kationenaustauschmembran getrennt ist,

entsalztes Wasser in das Kathodenabteil leitet, und gereinigte kaustische Lösung aus dem Kathodenabteil gewinnt,

dadurch gekennzeichnet,

daß die anfängliche Konzentration an kaustischen Alkalien größer als 15 g/l ist,

daß man die Elektrolyse bei einer Stromdichte zwischen 1500 und 3000 A/m² durchführt, bis die

Konzentration an haustischen Alkalien im Anolyten auf einen Wert nicht kleiner als 10 g/l reduziert ist und daß man die Elektrolyse dann bei einer Stromdichte zwischen 1000 und 500 A/m² durchführt, um die Konzentration an kaustischen Alkalien im Anolyten auf unter 2 g/l zu reduzieren,

wobei man die Konzentration an kaustischen Alkalien im Katholyten durch Regeln der Zuflußgeschwindigkeit an entsalztem Wasser in das Kathodenabteil konstant hält.

2. Elektrolytisches Verfahren nach Anspruch 1, dadurch gekennzeichnet, daß man

die Elektrolyse in mindestens zwei Elektrlysezellen durchführt,

die kontaminierte kaustische Lösung in Kaskade durch die Anodenabteile der Zellen beginnend bei der Zelle, die bei der höheren Stromdichte arbeitet, bis zu der Zelle, die bei der niedrigsten Stromdichte arbeitet, leitet, und

die kontaminierte kaustische Lösung mit einer Restkonzentration an kaustischen Alkalien kleiner als 2 g/l aus derjenigen Zelle, die bei der niedrigsten Stromdichte arbeitet, abfließen läßt.

3. Verfahren nach Anspruch 1 oder 2, dadurch gekennzeichnet, daß die verwendete kontaminierte kaustische Lösung aus der Regeneration von Ionenaustauscherharzen stammt.

4. Verfahren nach einem der Ansprüche 1 bis 3, dadurch gekennzeichnet, daß die Zellspannung weniger als etwa 5 Volt beträgt.

5. Verfahren nach einem der Ansprüche 1 bis 4, dadurch gekennzeichnet, daß man die Konzentration an kaustischen Alkalien im Anolyten bei der Elektrolyse, die man bei einer Stromdichte zwischen 1500 und 3000 A/m² durchführt, auf einen Wert von 15 bis 10 g/l reduziert, und

daß man die Konzentration an kaustischen Alkalien im Anolyten bei der Elektrolyse, die man bei einer Stromdichte zwischen 1000 und 500 A/m² durchführt, auf einen Wert von 1 bis unter 2 g/l reduziert.

6. Verfahren nach einem der Ansprüche 1 bis 5, dadurch gekennzeichnet, daß man die Konzentration an kaustischen Alkalien im Katholyten in einem Bereich zwischen 100 und 200 g/l konstant hält, indem man die Zuflußmenge an entsalztem Wasser reguliert.

**Revendications**

1. Procédé électrolytique pour la purification de solutions caustiques contaminées, comprenant l'introduction de la solution caustique contaminée au compartment anodique d'une cellule d'électrolyse séparée du compartiment cathodique par une membrane d'échange de cations,

l'introduction d'eau déminéralisée au compartiment cathodique, et récupération de la solution caustique purifiée dudit compartiment cathodique,

caractérisé en ce que

la concentration caustique initiale dépasse 15 g/l, l'électrolyse est conduite avec une densité de courant comprise entre 1500 et 3000 ampères par mètre carré, jusqu'à ce que la concentration caustique de l'anolyte est réduite à une valeur non inférieure à 10 g/l, et

qu'ensuite l'électrolyse est conduite à une densité du courant comprise entre 1000 et 5009 ampères par mètre carré pour continuer à réduire la concentration caustique dans l'anolyte à une valeur inférieure à 2 g/l, tandis que la concentration caustique dans le catholyte est maintenue constante en réglant le taux d'introduction de l'eau déminéralisée audit compartiment cathodique.

2. Procédé électrolytique selon la revendication 1, caractérisé en ce

que l'électrolyse est conduite dans au moins deux cellules d'électrolyse.

qu'on fait passer la solution caustique contaminée en cascade à travers les compartiments anodiques desdites cellules en commençant par la cellule opérant à une densité de courant plus élevée puis à la cellule opérant à la densité de courant le plus faible, et qu'on décharge la solution caustique contaminée ayant une concentration caustique résiduelle inférieure à 2 g/l de ladite cellule opérant à la densité de courant la plus faible.

3. Procédé selon la revendication 1 ou 2, caractérisé en ce qu'on utilise la solution caustique contaminée provenant de la régénération de résines échangeuses d'ions.

4. Procédé selon l'une des revendications 1 à 3, caractérisé en ce que le voltage de la cellule est inférieur à environ 5 volts.

5. Procédé selon l'une des revendications 1 à 4, caractérisé en ce que le concentration caustique dans l'anolythe est réduite à une valeur de 15 à 10 g/l dans l'électrolyse conduite à une densité de courant comprise entre 1500 et 3000 ampères par mètre carré, et que la concentration caustique de l'anolyte est réduite à une valeur de 1 à moins de 2 g/l dans l'électrolyse conduite à une densité de courant comprise entre 1000 et 500 ampères par métre carré.

6. Procédé selon les revendications 1 à 5, caractérisé en ce que la concentration caustique du catholyte est maintenue constante en un intervalle compris entre 100 et 200 g/l en ajustant le taux d'alimentation en eau déminéralisée.